# EUROPÄISCHE PATENTANMELDUNG

(11) **EP 3 693 587 A1**
(43) Veröffentlichungstag der Anmeldung: **12.08.2020**
(21) Anmeldenummer: 19210235.8
(22) Anmeldetag: 20.11.2019
(51) Int. Cl.: F02D 19/02, F02M 21/02, F02D 41/00

(54) **VERFAHREN ZUM BETREIBEN EINES GASMOTORS ODER EINES IN EINEM GASKRAFTSTOFFBETRIEBSMODUS BETRIEBENEN DUAL-FUEL-MOTORS SOWIE ENTSPRECHENDER MOTOR**

(30) Priorität: 06.02.2019 DE 102019102887
(71) Anmelder: MAN Energy Solutions SE, 86153 Augsburg (DE)
(72) Erfinder: Stoll, Sascha, 86679 Ellgau (DE); Terbeck, Stefan, 86482 Aystetten (DE); Walther, Hans-Philipp, 86500 Kutzenhausen (DE); Krauss, Anton, 86438 Kissing (DE)

(57) **Zusammenfassung**

Verfahren zum Betreiben eines Gasmotors oder eines in einem Gaskraftstoffbetriebsmodus betriebenen Dual-Fuel-Motors mit mehreren Zylindern, wobei in den Zylindern (1) ein zündfähiges Gemisch (4) aus einem gasförmigen Kraftstoff (10) und Verbrennungsluft (8) gezündet und verbrannt wird, und wobei das zündfähige Gemisch (4) aus dem gasförmigen Kraftstoff (10) und der Verbrennungsluft (8) für den jeweiligen Zylinder dadurch bereitgestellt wird, dass Verbrennungsluft (8), die über eine Verbrennungsluftleitung (7) in Richtung auf die Zylinder (1) geführt wird, stromaufwärts eines einlassseitigen Gaswechselventils (2) des jeweiligen Zylinders (1) mit dem gasförmigem Kraftstoff (10) gemischt wird, welcher über ein dem jeweiligen Zylinder (1) zugeordnetes Gasventil (14) zylinderindividuell zudosiert wird. Über die Verbrennungsluftleitung (7) wird ein nicht-zündfähiges Vorgemisch (9) aus der Verbrennungsluft (8) und dem gasförmigem Kraftstoff (10) in Richtung auf die Zylinder (1) geführt. Dem nicht-zündfähigen Vorgemisch (9) aus Verbrennungsluft (8) und gasförmigem Kraftstoff (10) wird stromaufwärts des einlassseitigen Gaswechselventils (2) über das dem jeweiligen Zylinder (1) zugeordnete Gasventil (14) weiterer gasförmiger Kraftstoff (10) zylinderindividuell zudosiert, um das nicht-zündfähige Vorgemisch (9) aus Verbrennungsluft (8) und gasförmigem Kraftstoff (10) in das zündfähige Gemisch (4) aus Verbrennungsluft (8) und gasförmigem Kraftstoff (10) zu wandeln.

## Beschreibung

Die Erfindung betrifft ein Verfahren zum Betreiben eines Gasmotors oder eines in einem Gaskraftstoffbetriebsmodus betriebenen Dual-Fuel-Motors.

Bei einem Dual-Fuel-Motor handelt es sich um eine Brennkraftmaschine, in welcher sowohl gasförmiger Kraftstoff in einem Gaskraftstoffbetriebsmodus als auch flüssiger Kraftstoff in einem Flüssigkraftstoffbetriebsmodus verbrannt werden kann. Im Flüssigkraftstoffbetriebsmodus wird den Zylindern flüssiger Kraftstoff, wie zum Beispiel Schweröl, über Kraftstoffinjektoren zugeführt, wobei der flüssige Kraftstoff unter Anwesenheit von Verbrennungsluft, die den Zylindern über einlassseitige Gaswechselventile zugeführt wird, verbrannt wird. Hierbei entstehendes Abgas wird über auslassseitige Gaswechselventile abgeführt. Im Gaskraftstoffbetriebsmodus wird in den Zylindern eines Dual-Fuel-Motors gasförmiger Kraftstoff, wie zum Beispiel Erdgas, verbrannt. Dabei wird den Zylindern ein Gemisch aus gasförmigem Kraftstoff und Verbrennungsluft über die einlassseitigen Gaswechselventile zugeführt, wobei Abgas wiederum über die auslassseitigen Gaswechselventile von abgeführt wird. Zur Zündung des Gemischs aus gasförmigem Kraftstoff und Verbrennungsluft im Gaskraftstoffbetriebsmodus dient bei Dual-Fuel-Motoren Zündöl. Bei dem Zündöl handelt es sich um den flüssigen Kraftstoff, der im Flüssigkraftstoffbetriebsmodus verbrannt wird. Abhängig von der Ausführung der Kraftstoffinjektoren kann im Gaskraftstoffbetriebsmodus der als Zündöl dienende flüssige Kraftstoff den Zylindern über dieselben Kraftstoffinjektoren zugeführt werden, über die im Flüssigkraftstoffbetriebsmodus der flüssige Kraftstoff den Zylindern zugeführt wird. Es ist jedoch auch möglich, den Zylindern separate Zündöl-Injektoren zuzuordnen, über die im Gaskraftstoffbetriebsmodus der als Zündöl dienende, flüssige Kraftstoff den Zylindern zugeführt wird.

In einem Gasmotor wird ausschließlich gasförmiger Kraftstoff verbrannt, wobei den Zylindern eines Gasmotors über die einlassseitigen Gaswechselventile ein Gemisch aus gasförmigem Kraftstoff und Verbrennungsluft zugeführt wird. Dieses Gemisch aus gasförmigem Kraftstoff und Verbrennungsluft wird bei einem Gasmotor über eine Zündkerze gezündet.

Sowohl bei einem Gasmotor als auch bei einem im Gaskraftstoffbetriebsmodus betriebenen Dual-Fuel-Motor wird den Zylindern des Motors demnach ein Gemisch aus einem gasförmigen Kraftstoff und Verbrennungsluft zugeführt, in den Zylindern gezündet und verbrannt. Das Gemisch aus dem gasförmigen Kraftstoff und der Verbrennungsluft wird für den jeweiligen Zylinder dadurch bereitgestellt, dass der Verbrennungsluft, die über eine Verbrennungsluftleitung in Richtung auf die Zylinder geführt wird, stromaufwärts des einlassseitigen Gaswechselventils des jeweiligen Zylinders gasförmiger Kraftstoff zudosiert wird, und zwar über ein dem jeweiligen Zylinder zugeordnetes Gasventil zylinderindividuell.

Die über das jeweilige Gasventil der Verbrennungsluft zudosierbare Menge an gasförmigem Kraftstoff ist dabei von der maximalen Öffnungsdauer des jeweiligen Gasventils abhängig. Die maximal zudosierbare Gasmenge korreliert dabei mit dem maximalen Energieinhalt des dem jeweiligen Zylinder zugeführten Gemischs aus gasförmigem Kraftstoff und Verbrennungsluft. Verfügt der gasförmige Kraftstoff über einen geringen Heizwert und demnach über einen geringen Energiegehalt, so kann es unter Umständen sein, dass der Energieinhalt des im Zylinder zu verbrennenden Gemischs aus gasförmigem Kraftstoff und Verbrennungsluft für eine stabile Verbrennung nicht ausreichend hoch ist.

Es besteht Bedarf daran, einen Gasmotor oder einen in einem Gaskraftstoffbetriebsmodus betriebenen Dual-Fuel-Motor mit einer stabileren Verbrennung zu betreiben.

Hiervon ausgehend liegt der Erfindung die Aufgabe zugrunde, ein neuartiges Verfahren zum Betreiben eines Gasmotors oder eines in einem Gaskraftstoffbetriebsmodus betriebenen Dual-Fuel-Motors zu schaffen. Diese Aufgabe wird durch ein Verfahren nach Anspruch 1 gelöst. Erfindungsgemäß wird über die Verbrennungsluftleitung ein nicht-zündfähiges Vorgemisch aus Verbrennungsluft und gasförmigem Kraftstoff in Richtung auf die Zylinder geführt. Dem nicht-zündfähigen Vorgemisch aus Verbrennungsluft und gasförmigem Kraftstoff wird stromaufwärts des einlassseitigen Gaswechselventils über das dem jeweiligen Zylinder zugeordnete Gasventil weiterer gasförmiger Kraftstoff zylinderindividuell zudosiert, um das nicht-zündfähige Vorgemisch aus Verbrennungsluft und gasförmigem Kraftstoff in das zündfähige Gemisch aus Verbrennungsluft und gasförmigem Kraftstoff zu wandeln.

Bei dem erfindungsgemäßen Verfahren wird über die Verbrennungsluftleitung nicht reine Verbrennungsluft in Richtung auf die Zylinder geführt, sondern vielmehr ein nicht-zündfähiges Vorgemisch aus Verbrennungsluft und gasförmigem Kraftstoff, dessen Energieinhalt unterhalb einer sogenannten Explosionsgrenze für das Gemisch aus Verbrennungsluft und gasförmigem Kraftstoff liegt. Diesem für die Zylinder gleichen Vorgemisch aus Verbrennungsluft und gasförmigem Kraftstoff wird zylinderindividuell stromaufwärts des jeweiligen einlassseitigen Gaswechselventils über das dem jeweiligen Zylinder zugeordnete Gasventil zylinderindividuell gasförmiger Kraftstoff zudosiert, um so das nicht-zündfähige Vorgemisch aus Verbrennungsluft und gasförmigem Kraftstoff in das zündfähige Gemisch aus Verbrennungsluft und gasförmigem Kraftstoff zu wandeln. Der maximale Energieinhalt eines in einem Zylinder zu verbrennenden Gemischs aus Verbrennungsluft und gasförmigem Kraftstoff wird demnach nicht mehr durch die maximale Öffnungsdauer des Gasventils begrenzt, vielmehr kann dieser Energieinhalt dadurch erhöht werden, dass über die Verbrennungsluftleitung das Vorgemisch aus gasförmigem Kraftstoff und Verbrennungsluft geführt wird, welches jedoch noch nicht zündfähig ist, dessen Mischungsverhältnis also unter der Explosionsgrenze des Gemischs aus gasförmigem Kraftstoff und Verbrennungsluft liegt.

Nach einer vorteilhaften Weiterbildung wird das Mischungsverhältnis des nicht-zündfähigen Vorgemischs aus Verbrennungsluft und gasförmigem Kraftstoff abhängig von Energiegehalt des gasförmigen Kraftstoffs eingestellt. Mit dieser Weiterbildung der Erfindung ist ein sicherer und effizienter Betrieb des jeweiligen Motors möglich. Das Mischungsverhältnis des über die Verbrennungsluftleitung zu führenden Vorgemischs aus Verbrennungsluft und gasförmigem Kraftstoff wird abhängig vom Energieinhalt des gasförmigen Kraftstoffs so eingestellt, dass dasselbe nicht zündfähig ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

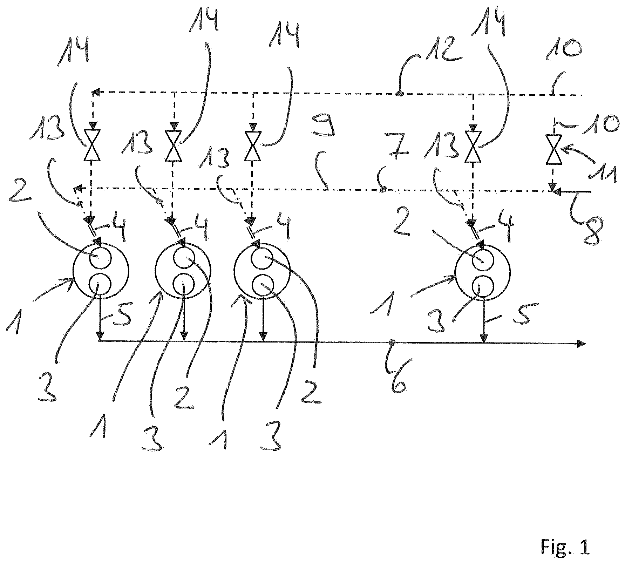

- Fig. 1: eine stark schematisierte Ansicht einer erfindungsgemäßen Brennkraftmaschine zur Verdeutlichung des erfindungsgemäßen Verfahrens.

Fig. 1 zeigt stark schematisiert einen Ausschnitt aus einem Gasmotor mit mehreren Zylindern 1.

Jeder Zylinder 1 verfügt über mindestens ein einlassseitiges Gaswechselventil 2 und mindestens ein auslassseitiges Gaswechselventil 3. Über das jeweilige einlassseitige Gaswechselventil 2 kann dem jeweiligen Zylinder 1 ein zündfähiges Gemisch 4 aus gasförmigem Kraftstoff 10 und Verbrennungsluft 8 zugeführt werden, wobei dieses Gemisch 4 aus dem gasförmigen Kraftstoff 10 und der Verbrennungsluft 8 in den Zylindern 1 gezündet und verbrannt wird. Hierbei entstehendes Abgas 5 kann über die auslassseitigen Gaswechselventile 3 von den Zylindern 1 abgeführt und über eine Abgasleitung 6 in Richtung auf ein Abgasnachbehandlungssystem (nicht gezeigt) geführt werden.

Bei dem Gemisch 4 aus dem gasförmigen Kraftstoff 10 und der Verbrennungsluft 8, welches den Zylindern 1 über die einlassseitigen Gaswechselventile 2 zugeführt wird, handelt es sich um ein zündfähiges Gemisch 4 aus Gas und Verbrennungsluft, welches bei einem Gasmotor mithilfe einer Zündkerze des jeweiligen Zylinders 1 gezündet wird.

Fig. 1 zeigt eine Verbrennungsluftleitung 7, über die Verbrennungsluft 8 in Richtung auf die Zylinder 1 geführt werden kann. Dabei wird über die Verbrennungsluftleitung 7 nicht reine Verbrennungsluft 8 in Richtung auf die Zylinder 1 geführt, sondern vielmehr eine Vorgemisch 9 aus Verbrennungsluft 8 und gasförmigem Kraftstoff 10, welches nicht-zündfähig ist. Das Mischungsverhältnis dieses Vorgemischs 9 aus gasförmigem Kraftstoff 8 und Verbrennungsluft 10 liegt demnach unterhalb einer sogenannten Explosionsgrenze.

Fig. 1 zeigt eine Dosiereinrichtung 11, über die der Verbrennungsluft 8 gasförmiger Kraftstoff 10 zudosiert werden kann, und zwar in einem für alle Zylinder 1, die über die Verbrennungsluftleitung 7 mit Verbrennungsluft 8 versorgt werden, gemeinsamen Mischungsverhältnis aus gasförmigem Kraftstoff 10 und Verbrennungsluft 8.

Fig. 1 zeigt weiterhin eine Gasleitung 12, über die gasförmiger Kraftstoff 10 in Richtung auf die einzelnen Zylinder 1 geführt werden kann, um den über die Gasleitung 12 in Richtung auf die Zylinder 1 geführten gasförmigen Kraftstoff 10 stromaufwärts des jeweiligen einlassseitigen Gaswechselventils 2 des jeweiligen Zylinders 1 im Bereich einer von der Verbrennungsluftleitung 7 abzweigenden Abzweigung 13, die zum jeweiligen Zylinder 1 führt, mit dem Vorgemisch 9 zu mischen.

Durch die Mischung des Vorgemischs 9 aus Verbrennungsluft 8 und gasförmigem Kraftstoff 10 mit dem über die Gasleitung 12 geführten weiteren gasförmigen Kraftstoff 10 entsteht das Gemisch 4 aus gasförmigem Kraftstoff 10 und Verbrennungsluft 8, welches zündfähig ist.

Fig. 1 kann entnommen werden, dass jedem Zylinder 1 ein Gasventil 14 zugeordnet ist, über welches dem Vorgemisch 9 aus Verbrennungsluft 8 und gasförmigem Kraftstoff 10 zylinderindividuell weiterer gasförmiger Kraftstoff 10 zudosiert werden kann, nämlich im Bereich der von der Verbrennungsluftleitung 7 abzweigenden, zum jeweiligen Zylinder 1 führenden Abzweigung 13 unmittelbar stromaufwärts des jeweiligen einlassseitigen Gaswechselventils 2 des jeweiligen Zylinders 1.

Mit der hier vorliegenden Erfindung wird demnach vorgeschlagen, über die zu den Zylindern 1 führende Verbrennungsluftleitung 7 nicht ausschließlich Verbrennungsluft 8 zu führen, sondern vielmehr ein nicht-zündfähiges Vorgemisch 9 aus gasförmigem Kraftstoff 10 und Verbrennungsluft 8. Dieses Vorgemisch 9 ist für alle Zylinder 1 identisch.

Stromaufwärts des jeweiligen Zylinders 1 wird diesem Vorgemisch 9 aus Verbrennungsluft 8 und gasförmigem Kraftstoff 10 weiterer gasförmiger Kraftstoff 10 zudosiert, nämlich über das dem jeweiligen Zylinder 1 zugeordnete Gasventil 14, über welches dem jeweiligen Zylinder 1 zylinderindividuell unmittelbar stromaufwärts des jeweiligen einlassseitigen Gaswechselventils 2 weiterer gasförmiger Kraftstoff 10 zugeführt werden kann, um das Vorgemisch 9 in ein zündfähiges Gemisch 4 aus gasförmigem Kraftstoff 10 und Verbrennungsluft 8 zu wandeln.

Das Mischungsverhältnis des Vorgemischs 9 aus Verbrennungsluft 8 und gasförmigem Kraftstoff 10 wird abhängig vom Energieinhalt des gasförmigen Kraftstoffs 10 bestimmt, und zwar derart, dass das Vorgemisch 9 nicht-zündfähig ist, dessen Mischungsverhältnis also unter einer sogenannten Explosionsgrenze liegt. Hiermit kann der Motor sicher und effizient betrieben werden.

Der Energieinhalt des im Zylinder 1 zu verbrennenden Gemischs 4 aus gasförmigem Kraftstoff 10 und Verbrennungsluft 8 ist nicht mehr von der maximalen Öffnungsdauer der Gasventile 14 abhängig, sondern kann vielmehr durch das Mischungsverhältnis des Vorgemischs 9 erhöht werden. Hiermit ist insbesondere dann, wenn ein gasförmiger Kraftstoff mit geringem Energieinhalt verbrannt werden soll, ein stabiler Betrieb des Motors möglich.

### Bezugszeichenliste

- 1: Zylinder
- 2: einlassseitiges Gaswechselventil
- 3: auslassseitiges Gaswechselventil
- 4: Gemisch
- 5: Abgas
- 6: Abgasleitung
- 7: Verbrennungsluftleitung
- 8: Verbrennungsluft
- 9: Vorgemisch
- 10: gasförmiger Kraftstoff
- 11: Dosiereinrichtung
- 12: Gasleitung
- 13: Abzweigung
- 14: Gasventil

## Patentansprüche

1. Verfahren zum Betreiben eines Gasmotors oder eines in einem Gaskraftstoffbetriebsmodus betriebenen Dual-Fuel-Motors mit mehreren Zylindern,
wobei in den Zylindern (1) des Gasmotors oder des Dual-Fuel-Motors ein zündfähiges Gemisch (4) aus einem gasförmigen Kraftstoff (10) und Verbrennungsluft (8) gezündet und verbrannt wird,
wobei das zündfähige Gemisch (4) aus dem gasförmigen Kraftstoff (10) und der Verbrennungsluft (8) für den jeweiligen Zylinder dadurch bereitgestellt wird, dass Verbrennungsluft (8), die über eine Verbrennungsluftleitung (7) in Richtung auf die Zylinder (1) geführt wird, stromaufwärts eines einlassseitigen Gaswechselventils (2) des jeweiligen Zylinders (1) mit dem gasförmigem Kraftstoff (10) gemischt wird, welcher über ein dem jeweiligen Zylinder (1) zugeordnetes Gasventil (14) zylinderindividuell zudosiert wird,
**dadurch gekennzeichnet, dass**
über die Verbrennungsluftleitung (7) ein nicht-zündfähiges Vorgemisch (9) aus der Verbrennungsluft (8) und dem gasförmigem Kraftstoff (10) in Richtung auf die Zylinder (1) geführt wird,
dem nicht-zündfähigen Vorgemisch (9) aus Verbrennungsluft (8) und gasförmigem Kraftstoff (10) stromaufwärts des einlassseitigen Gaswechselventils (2) über das dem jeweiligen Zylinder (1) zugeordnete Gasventil (14) weiterer gasförmiger Kraftstoff (10) zylinderindividuell zudosiert wird, um das nicht-zündfähige Vorgemisch (9) aus Verbrennungsluft (8) und gasförmigem Kraftstoff (10) in das zündfähige Gemisch (4) aus Verbrennungsluft (8) und gasförmigem Kraftstoff (10) zu wandeln.

2. Verfahren nach Anspruch 1, **dadurch gekennzeichnet, dass** das Mischungsverhältnis des nicht-zündfähigen Vorgemischs (9) aus Verbrennungsluft (8) und gasförmigem Kraftstoff (10) abhängig von Energiegehalt des gasförmigen Kraftstoffs (10) eingestellt wird.

3. Verfahren nach Anspruche 1 oder 2, **dadurch gekennzeichnet, dass** das Mischungsverhältnis aus Verbrennungsluft (8) und gasförmigem Kraftstoff (10) des nicht-zündfähigen Vorgemischs (9) für alle Zylinder (1) gemeinsam eingestellt wird.

4. Gasmotor oder Dual-Fuel-Motor,
mit mehreren Zylindern (1), die einlassseitige Gaswechselventile (2) und auslassseitige Gaswechselventile (3) aufweisen,
mit einer Verbrennungsluftleitung (7), über die Verbrennungsluft (8) in Richtung auf die einlassseitigen Gaswechselventile (2) der Zylinder (1) führbar ist,
mit von der Verbrennungsluftleitung (7) zu den einlassseitigen Gaswechselventilen (2) der Zylinder (1) führenden Abzweigungen (13),
mit einer Gasleitung (12) und mit den Zylindern (1) zugeordneten Gasventilen (14), über welche stromaufwärts des jeweiligen einlassseitigen Gaswechselventils (2) des Zylinders (1) die zum jeweiligen Zylinder (1) geführte Verbrennungsluft (8) mit gasförmigem Kraftstoff (10) mischbar ist, um dem jeweiligen Zylinder (1) ein zündfähiges Gemisch (4) aus dem gasförmigen Kraftstoff (10) und Verbrennungsluft (8) bereitzustellen, welches in den Zylindern (1) zündbar und verbrennbar ist,
**dadurch gekennzeichnet, dass**
über die Verbrennungsluftleitung (7) ein nicht-zündfähiges Vorgemisch (9) aus Verbrennungsluft (8) und gasförmigem Kraftstoff (10) in Richtung auf die Zylinder (1) führbar ist,
dem nicht-zündfähigen Vorgemisch (9) aus Verbrennungsluft (8) und gasförmigem Kraftstoff (10) stromaufwärts des einlassseitigen Gaswechselventils (2) über das dem jeweiligen Zylinder (1) zugeordnete Gasventil (14) weiterer gasförmiger Kraftstoff (8) zylinderindividuell zudosier bar ist, um das nicht-zündfähige Vorgemisch (9) aus Verbrennungsluft (8) und gasförmigem Kraftstoff (10) in das zündfähige Gemisch (4) aus Verbrennungsluft (8) und gasförmigem Kraftstoff (10) zu wandeln.

5. Gasmotor oder Dual-Fuel-Motor nach Anspruch 4, **gekennzeichnet durch** eine der Verbrennungsluftleitung (7) zugeordnete Dosiereinrichtung (11) für gasförmigen Kraftstoff (10), über die das Mischungsverhältnis aus Verbrennungsluft (8) und gasförmigem Kraftstoff (10) des nicht-zündfähigen Vorgemischs (9) für alle Zylinder (19 gemeinsam einstellbar ist.
